# EUROPÄISCHE PATENTSCHRIFT

(11) **EP 0 867 251 B1**
(45) Veröffentlichungstag und Bekanntmachung des Hinweises auf die Patenterteilung: **08.01.2003**
(21) Anmeldenummer: 98104536.2
(22) Anmeldetag: 13.03.1998
(51) Int. Cl.: B23D 55/06

(54) **Vorrichtung zur Einstellung der exakten Position eines Sägeblatts auf der Lauffläche der Umlenkrollen von Bandsägen**
Device for setting the exact position of a saw blade on the running surface of the wheels of band saw
Dispositif pour l'ajustage de la position exacte d'une lame de scie sur la surface périphérique des volants d'une scie à ruban

(30) Priorität: 26.03.1997 DE 19712735
(43) Veröffentlichungstag der Anmeldung: 30.09.1998
(73) Patentinhaber: Esterer WD GmbH & Co., 72108 Rottenburg a.N. (DE)
(72) Erfinder:
(74) Vertreter: Witte, Alexander, Dr.-Ing.

(56) Entgegenhaltungen:
- CA-A- 895 668
- GB-A- 191 512 751
- US-A- 3 158 184

## Beschreibung

Die Erfindung betrifft eine Vorrichtung zum Einstellen der Position eines Bandsägeblatts einer Bandsäge, mit
a) einer ersten Umlenkrolle, die drehfest an einer Welle befestigt und mit dieser um eine erste Achse drehbar ist;
b) einer axial unverschiebbaren und drehfesten Lagerhülse, in der die Welle um die erste Achse drehbar gelagert ist;
c) einer zweiten Umlenkrolle, die um eine zweite Achse drehbar und ortsfest an einem Sägegestell gelagert sowie mit einem Antrieb verbunden ist, wobei die Achsen in einer Grundstellung zueinander parallel verlaufen;
d) einem über Laufflächen der Umlenkrollen geführten Bandsägeblatt;
e) Mitteln zum Neigen der ersten Achse relativ zu der zweiten Achse in der von den beiden Achsen aufgespannten Ebene; und mit
f) Mitteln zum Verschieben der ersten Umlenkrolle entlang der ersten Achse.

Eine Vorrichtung der vorstehend genannten Art ist aus dem Dokument GB 12 751 bekannt.

Die Erfindung bezieht sich insbesondere auf Großbandsägen mit Bandlängen von bspw. 6 bis 12 m und Umlenkrollendurchmessern von bspw. 1 bis 2 m.

Bekanntlich sind die Laufflächen der Umlenkrollen von Bandsägen ballig ausgebildet, um eine Zentrierwirkung auf das umlaufende Sägeblatt auszuüben. Außerdem muß das Sägeblatt so gegenüber den Umlenkrollen ausgerichtet sein, daß der gezahnte Rand außerhalb der Umlenkrollen verläuft. Bei Bandsägen der vorstehend genannten Größenordnung gilt als Faustregel, daß der Zahngrund etwa 5 bis 10 mm Abstand von der Umlenkrollenkante einhalten soll. Aufgrund von unvermeidbaren Unregelmäßigkeiten der bandförmigen Sägeblätter, insbesondere hinsichtlich der in Richtung der Bandbreite geringfügig variierenden Bandlänge, stellen sich unterschiedliche Sägeblätter im Betrieb nicht immer in der idealen Zentrierposition ein. Es ist deshalb bekannt, durch geringfügiges Neigen zumindest einer Achse eine Verlagerung des umlaufenden Sägeblatts in eine zumindest annähernd ideale Position vorzunehmen.

Durch diese Winkelverstellung zwischen den in der Grundposition zueinander parallelen Achsen treten im bandförmigen Sägeblatt zusätzliche Spannungen auf. Wenn nur eine Laufrolle geneigt ist, findet im Sägeblatt eine gegenläufige Verformung nach Art einer S-Kurve statt, die zu relativ hohen Spannungsbelastungen führt. Dies bringt die Gefahr mit sich, daß im Sägeblatt Spannungsrisse auftreten.

Man hat versucht, diese ungünstigen Verhältnisse dadurch zu reduzieren, daß man den erforderlichen Neigungswinkel durch gegenläufige Neigung der Achsen beider Umlenkrollen um jeweils den halben Neigungswinkel einstellt. Dadurch erfährt das Sägeblatt nur eine einfache Krümmung, deren Zentrum zumindest annähernd in der Mitte zwischen beiden Achsen liegt. Dadurch reduziert sich die Spannungsbelastung des Sägeblatts und die Gefahr der Rissebildung spürbar. Diese Konstruktion ist aber wegen der nötigen und aufeinander abzustimmenden, schwenkbaren Lagerung beider Umlaufrollen relativ kompliziert und entsprechend kostspielig.

Aus dem eingangs genannten Dokument GB 12 751 ist eine Bandsäge mit zwei Umlenkrollen für ein Bandsägeblatt bekannt. Die obere Umlenkrolle sitzt mittels einer Keilverzahnung drehfest auf einer Welle, die im übrigen in einem Lager eines Ständers der Bandsäge gelagert ist. Die Umlenkrolle ist ihrerseits starr mit einer Hülse verbunden, die als sphärisches Lager ausgebildet ist, so daß die Umlenkrolle um zwei Achsen verkippt werden kann, die jeweils zueinander senkrecht und senkrecht zur Achse der Welle verlaufen.

Die untere Umlenkrolle der Bandsäge ist in ähnlicher Weise auf einer Welle befestigt, die ihrerseits ebenfalls in einem Lager des Ständers gelagert ist.

Die Verkippung der Umlenkrollen relativ zu den sie tragenden Wellen geschieht bei dieser bekannten Bandsäge mittels jeweils zweier Schrauben, die im radialen Abstand von der Wellenachse mit einem balligen freien Ende an einem Ring der Umlenkrollen anliegen.

Die bekannte Anordnung ist deshalb so getroffen, um das Bandsägeblatt relativ zu einer Grundstellung seiner Schnittrichtung verschwenken und damit schräge Schnitte durch Werkstücke führen zu können.

Aus dem Dokument US 372 446 ist eine weitere Bandsäge bekannt, bei der die obere Umlenkrolle mit einer sie tragenden Welle in einer axial unverschiebbaren und drehfesten Lagerhülse gelagert ist. Die axiale Position der Welle in der Lagerhülse ist mechanisch mittels Einstellelementen veränderbar und die Lagerhülse kann insgesamt um eine Horizontalachse verkippt werden. Die untere Umlenkrolle ist ortsfest gelagert und nicht verstellbar.

Der Erfindung liegt die Aufgabe zugrunde, eine Vorrichtung der eingangs genannten Art dahingehend weiterzubilden, daß die bisher bestehende Gefahr von zu hohen Spannungskonzentrationen im Sägeblatt reduziert werden kann, wobei insgesamt eine einfachere mit geringerem Konstruktionsaufwand entstehen soll, die überdies mittels eines geeigneten Steuergeräts betreibbar ist.

Diese Aufgabe wird bei einer Vorrichtung der eingangs genannten Art erfindungsgemäß dadurch gelöst, daß
g) die Lagerhülse mittels eines ersten Stellmotors um eine dritte Achse verschwenkbar ist, die rechtwinkelig zu der von den Achsen aufgespannten Ebene verläuft; und
h) daß die Welle in der Lagerhülse mittels eines zweiten Stellmotors in Richtung der ersten Achse verschiebbar ist.

Mittels der beiden Stellmotoren kann auf diese Weise die erste Umlenkrolle in eine hinsichtlich der mechanischen Belastung optimale Stellung verfahren werden, ohne daß manuelle Arbeiten an der Lagerung der ersten Umlenkrolle vorgenommen werden müssen. Dies kann auch im Betrieb der Bandsäge geschehen, insbesondere mittels eines geeigneten Steuergeräts.

Bei einer besonders bevorzugten Ausführungsform der Erfindung sind die Stellbewegungen der beiden Stellmotoren nach einer vorgegebenen Gesetzmäßigkeit miteinander verknüpft.

Dabei besteht eine erste Variante darin, daß einem Stellinkrement des ersten Stellmotors ein Stellinkrement des zweiten Stellmotors derart zugeordnet ist, daß sich bei nicht parallelen Achsen der Umlenkrollen die rechtwinkelig zu ihren Achsen verlaufenden Mittelebenen der beiden Umlenkrollen zumindest annähernd im Bereich der Winkelhalbierenden des von beiden Achsen eingeschlossenen Winkels schneiden.

Bei einer anderen Variante sind die Winkelverstellung der Lagerhülse und die Axialverstellung der darin gelagerten Welle jeweils durch einen Weggeber ermittelbar, und die Meßwerte sind einem Steuergerät zuleitbar, das geeignet ist, in Abhängigkeit von diesen Meßwerten die Stellmotoren derart zu steuern, daß sich bei nicht parallelen Achsen der Umlenkrollen die rechtwinkelig zu ihren Achsen verlaufende Mittelebene der beiden Umlenkrollen zumindest annähernd im Bereich der Winkelhalbierenden des von beiden Achsen eingeschlossenen Winkels schneiden.

Anhand der nun folgenden Beschreibung eines in der Zeichnung dargestellten Ausführungsbeispiels der Erfindung wird diese näher erläutert.

Es zeigt:
- Fig. 1: einen Schnitt durch den Umfang einer Umlenkrolle einer Bandsäge mit darüber geführtem, bandförmigem Sägeblatt,
- Fig. 2: in schematischer Darstellung den Verlauf des Sägeblatts über beide Umlenkrollen einer Bandsäge bekannter Bauart, bei welcher die Achsen der beiden Umlenkrollen parallel zueinander verlaufen;
- Fig. 3: eine der Fig. 2 entsprechende Darstellung des Sägeblattverlaufs, wenn die obere Umlenkrolle geneigt ist, wobei der Neigungswinkel zum besseren Verständnis der Problematik übertrieben groß dargestellt ist;
- Fig. 4: eine der Fig. 2 entsprechende Darstellung des Sägeblattverlaufs, wenn beide Umlenkrollen gegensinnig um gleiche Winkel geneigt sind;
- Fig. 5: eine der Fig. 2 entsprechende Darstellung des Sägeblattverlaufs bei einer erfindungsgemäß ausgestalteten Bandsäge, wenn die obere Laufrolle nicht nur geneigt, sondern zugleich in einer auf die Neigung abgestimmten Weise axial verstellt ist; und
- Fig. 6: eine schematische Darstellung einer Bandsäge mit der erfindungsgemäßen Vorrichtung.

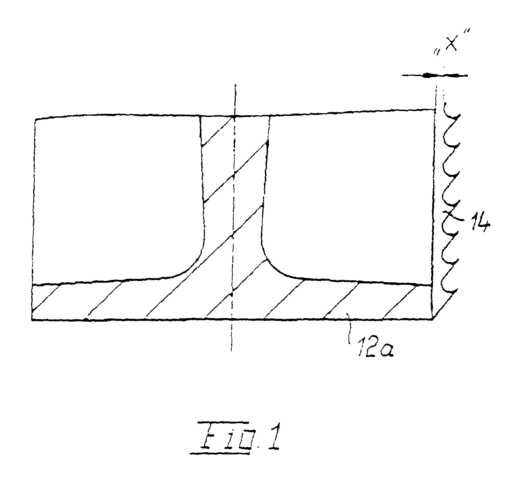

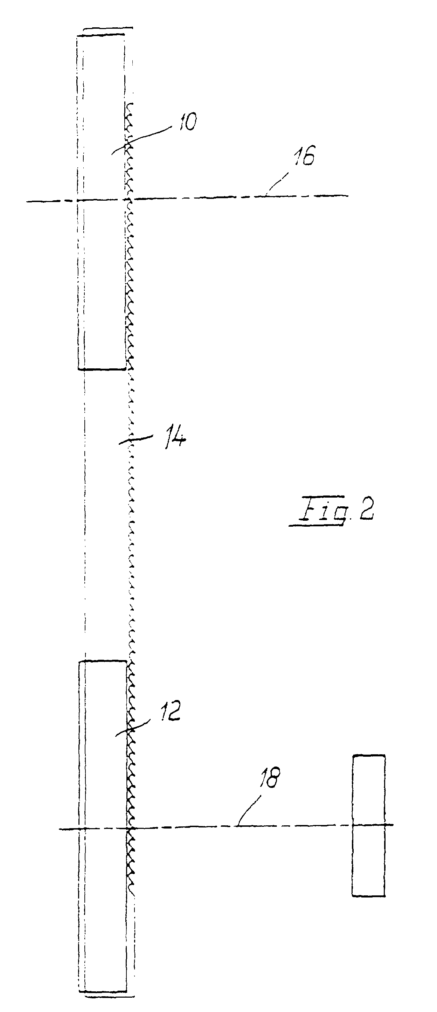

In Fig. 1 bezeichnet 12a einen Abschnitt einer unteren Umlenkrolle 12 für ein bandförmiges Sägeblatt 14 einer Bandsäge mit zwei in den Figuren 2 bis 5 dargestellten Umlenkrollen 10 und 12, deren Achsen 16 bzw. 18 in einer Grundstellung (Fig. 2) parallel zueinander verlaufen. Die beiden Achsen 16 und 18 sind in einer gemeinsamen vertikalen Ebene angeordnet, so daß der oberen Umlenkrolle 10 eine untere Umlenkrolle 12 zugeordnet ist. Aus Fig. 1 ist die gewünschte Positionierung des Sägeblatts 14 auf der Umlenkrolle 12 dargestellt, wobei der Abstand des Zahngrundes von der benachbarten Kante der Umlenkrolle 12 mit "X" bezeichnet ist.

Für die in Fig. 1 nicht gezeigte Umlenkrolle 10 wird die gleiche Positionierung angestrebt. Das Maß "X" beträgt bei den bereits erwähnten Bandlängen von 6 bis 12 m und Umlenkrollendurchmessern von 1 bis 2 m etwa 5 bis 10 mm.

In den Fig. 2 bis 6 ist der Verlauf des Sägeblatts zwischen den beiden Umlenkrollen 10 und 12 dargestellt.

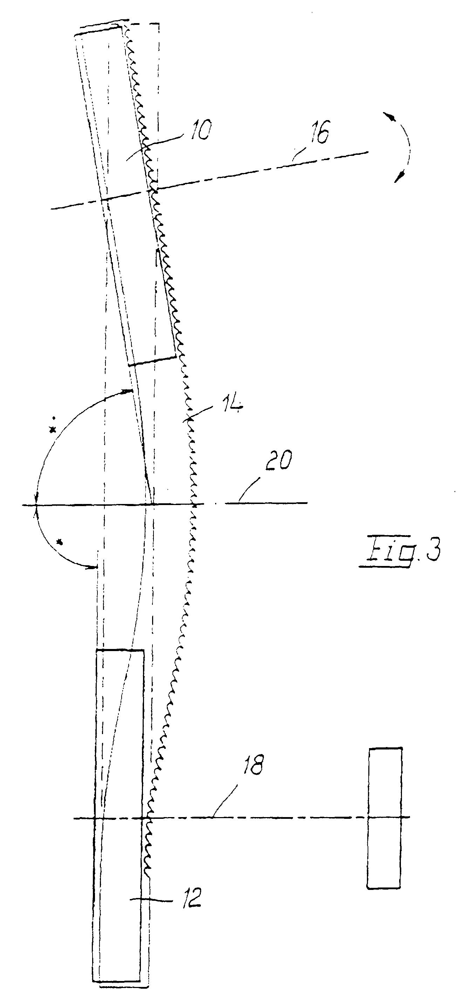

Die Fig. 3 bezieht sich auf eine bereits einleitend erwähnte, bekannte Konstruktion, bei welcher die Achse 16 der oberen Umlenkrolle 10 in der durch beide Achsen 16 und 18 bestimmten Ebene um eine horizontale, die Achse 16 im Bereich der Mittelebene der oberen Umlenkrolle 10 schneidenden Achse verstellt werden kann, um den Lauf des bandförmigen Sägeblatts 14 über die Umlenkrollen 10 und 12 auf die in Fig. 1 gezeigte Situation einzustellen. Man kann der Fig. 3 entnehmen, daß das Sägeblatt 14 zwischen beiden Umlenkrollen 10 und 12 einen S-förmigen Verlauf aufweist, der zu den bereits beschriebenen hohen, für das Sägeblatt 14 gefährlichen Spannungsbelastungen führt.

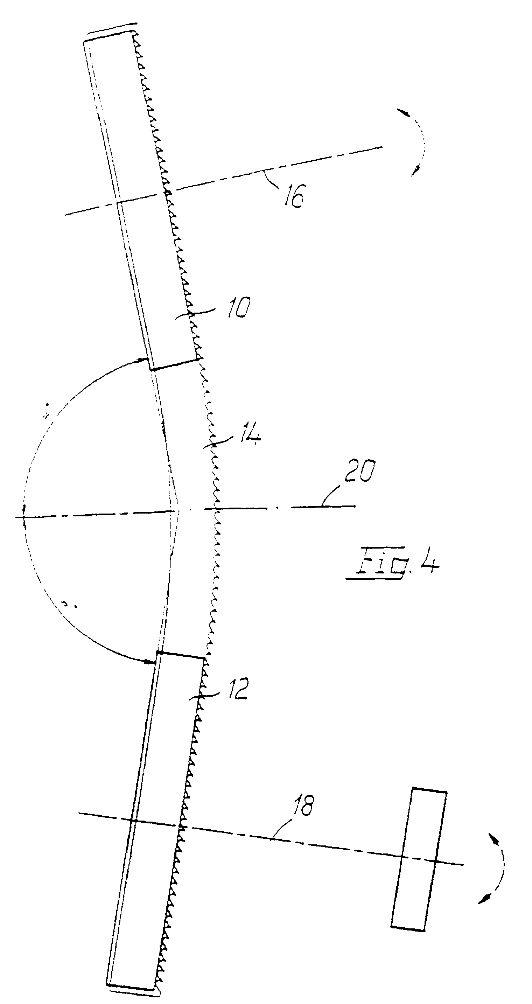

Die in Fig. 4 gezeigte Anordnung sieht eine gegensinnige Verstellbarkeit der oberen Achse 16 und der unteren Achse 18 um gleiche Winkel vor, wobei die zur Achsrichtung in Grundstellung parallele Richtung durch die strichpunktierte Linie 20 angezeigt ist. Durch diese Verstellbarkeit beider Achsen 16, 18 kann die Ablenkstelle auf die Winkelhalbierende 20 des von den Achsen 16 und 18 eingeschlossenen Winkels verlagert werden, so daß sich auf beiden Seiten der Ablenkstelle gleiche Längen des Sägeblatts 14 befinden und nur eine einfache Krümmung des Sägeblatts 14 stattfindet, die wesentlich geringere Spannungen verursacht.

Wie bereits geschildert, ist diese Konstruktion wegen der Verstellbarkeit beider Umlenkrollen 10 und 12 sehr aufwendig.

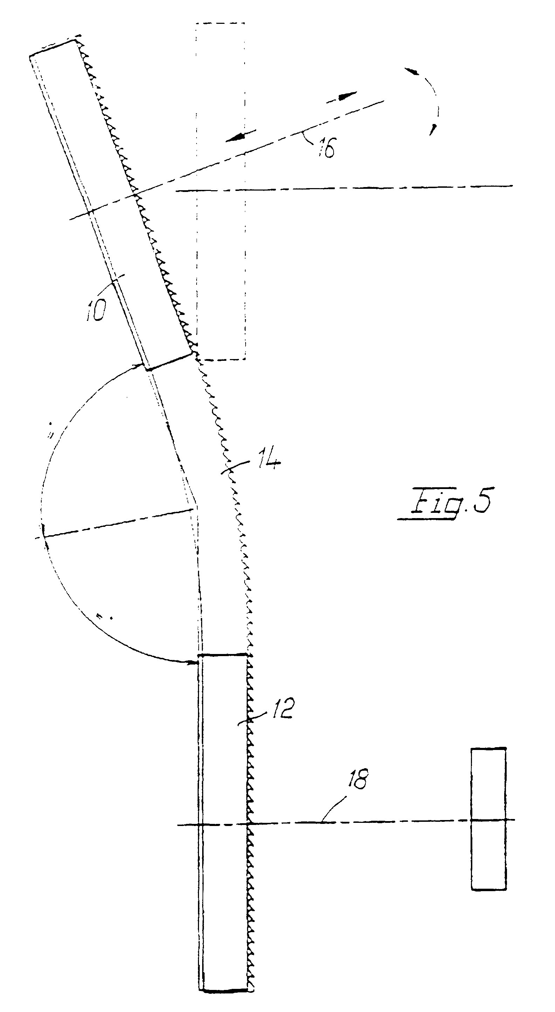

Die Fig. 5 zeigt das Grundprinzip der erfindungsgemäßen Lösung. Diese ermöglicht einen Verlauf des Sägeblatts 14, der bei jeweils gleicher Größe des von den beiden Achsen 16 und 18 eingeschlossenen Winkels völlig dem Verlauf des Sägeblatts 14 bei der Konstruktion nach Fig. 4 entspricht, obwohl nur die Achse 16 der oberen Umlenkrolle 10 geneigt wird, während die Achse 18 der unteren Umlenkrolle 12 ihre Position nicht verändert. Dies wird dadurch erreicht, daß abhängig von der Winkelverstellung der Achse 16 die obere Umlenkrolle 10 entlang der Achse 16 verstellt wird.

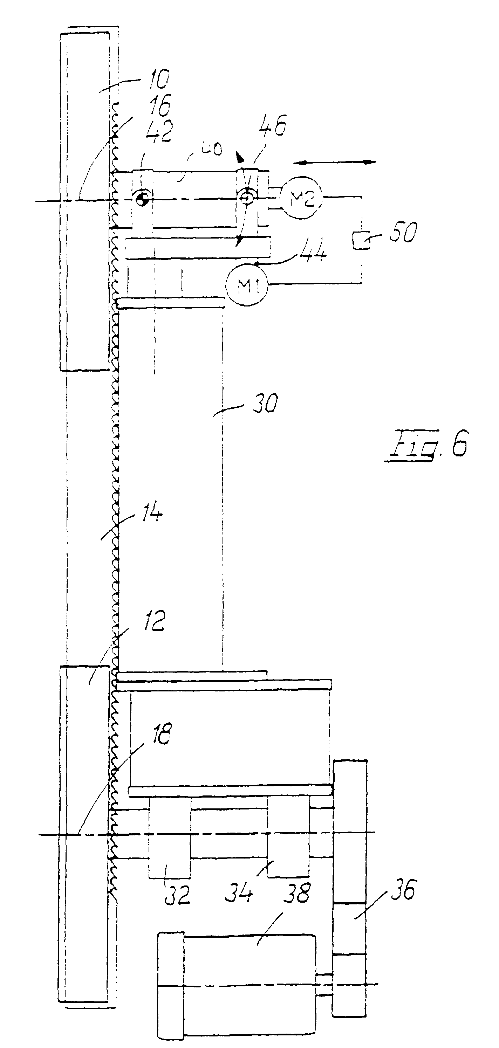

Die Fig. 6 zeigt schematisch die hierzu dienende Vorrichtung.

In Fig. 6 bezeichnet 30 das ortsfeste Gestell einer Bandsäge mit den beiden Umlenkrollen 10 und 12, über die ein bandförmiges Sägeblatt 14 geführt ist. Der unteren Umlenkrolle 12 ist eine Welle zugeordnet, die in fest am Gestell 30 angebrachten Lagern 32 und 34 gelagert und über einen Bandtrieb 36 von einem Antriebsmotor 38 antreibbar ist. Die Mittelachse dieser Welle ist mit 18 bezeichnet.

Der oberen Umlenkrolle 10 ist eine Welle zugeordnet, deren Mittelachse mit 16 bezeichnet ist und die axial verschiebbar von einer Lagerhülse 40 aufgenommen wird. Die Lagerhülse 40 ist um eine rechtwinkelig zur gemeinsamen Ebene der Achsen 16 und 18 verlaufenden Achse 42 verstellbar und dadurch gegenüber ihrer horizontalen Grundstellung um einen variablen Neigungswinkel verschwenkbar.

Um diese Schwenkbewegung zu erzeugen, greift eine durch einen ersten Stellmotor M1 in vertikaler Richtung verstellbare Stellspindel 44 an einem Gelenkzapfen 46 an, der von der Achse 42 einen Abstand aufweist und parallel zur Achse 42 an der Lagerhülse 40 angebracht ist.

Die axiale Stellbewegung entlang der Achse 16 wird durch einen zweiten Stellmotor M2 auf die Welle der Umlenkrolle 10 übertragen.

Eine den beiden Stellmotoren M2 und M2 zugeordnete Steuerung 50 dient dazu, die Stellbewegungen zu koordinieren. Dies kann dadurch geschehen, daß der Stellbereich des ersten Stellmotors M1 in eine Folge von einzelnen Stellschritten bzw. Inkrementen unterteilt ist. Jedem dieser Stellschritte ist ein Stellschritt bestimmter Größe des zweiten Stellmotors M2 zugeordnet, der sich gegebenenfalls nach einer vorgegebenen Gesetzmäßigkeit von Stellschritt zu Stellschritt ändert. Auf diese Weise sind nach jeder beliebigen Anzahl von Stellschritten innerhalb des Stellbereichs die Winkelverstellung der Lagerhülse 40 und die dann erfolgte axiale Positionsänderung der Welle der Umlenkrolle 10 entlang der Achse 16 so aufeinander abgestimmt, daß eine der Situation in Fig. 5 entsprechende Situation erreicht ist.

Es können aber auch die Winkelverstellung der Lagerhülse 40 und die Axialverstellung der darin gelagerten Welle entlang der Achse 16 jeweils durch einen Weggeber ermittelt und die Meßwerte dem Steuergerät 50 zugeleitet werden. Das Steuergerät 50 ist geeignet, in Abhängigkeit von diesen Meßwerten die Stellmotoren M1, M2 derart zu steuern, daß sich bei nicht parallelen Achsen 16, 18 der Umlenkrollen 10, 12 die rechtwinklig zu ihren Achsen 16, 18 verlaufenden Mittelebenen der beiden Umlenkrollen 10, 12 zumindest annähernd im Bereich der Winkelhalbierenden des von beiden Achsen 16, 18 eingeschlossenen Winkels schneiden.

## Patentansprüche

1. Vorrichtung zum Einstellen der Position eines Sägeblatts einer Bandsäge, mit:
a) einer ersten Umlenkrolle (10), die drehfest an einer Welle befestigt und mit dieser um eine erste Achse (16) drehbar ist;
b) einer axial unverschiebbaren und drehfesten Lagerhülse (40), in der die Welle um die erste Achse (16) drehbar gelagert ist;
c) einer zweiten Umlenkrolle (12), die um eine zweite Achse (18) drehbar und ortsfest an einem Sägegestell (30) gelagert sowie mit einem Antrieb (36, 38) verbunden ist, wobei die Achsen (16, 18) in einer Grundstellung zueinander parallel verlaufen;
d) einem über Laufflächen der Umlenkrollen (10, 12) geführten Bandsägeblatt (14);
e) Mitteln zum Neigen der ersten Achse (16) relativ zu der zweiten Achse (18) in der von den beiden Achsen (16, 18) aufgespannten Ebene; und mit
f) Mitteln zum Verschieben der ersten Umlenkrolle (10) entlang der ersten Achse (16),
**dadurch gekennzeichnet, daß**
g) die Lagerhülse (40) mittels eines ersten Stellmotors (M1) um eine dritte Achse (42) verschwenkbar ist, die rechtwinkelig zu der von den Achsen (16, 18) aufgespannten Ebene verläuft; und
h) daß die Welle in der Lagerhülse (40) mittels eines zweiten Stellmotors (M2) in Richtung der ersten Achse (16) verschiebbar ist.

2. Vorrichtung nach Anspruch 1, **dadurch gekennzeichnet, daß** die Stellbewegungen der beiden Stellmotoren (M1, M2) nach einer vorgegebenen Gesetzmäßigkeit miteinander verbunden sind.

3. Vorrichtung nach Anspruch 2, **dadurch gekennzeichnet, daß** einem Stellinkrement des ersten Stellmotors (M1) ein Stellinkrement des zweiten Stellmotors (M2) derart zugeordnet ist, daß sich bei nicht parallelen Achsen (16, 18) der Umlenkrollen (10, 12) die rechtwinkelig zu ihren Achsen verlaufenden Mittelebenen der beiden Umlenkrollen (10, 12) zumindest annähernd im Bereich der Winkelhalbierenden des von den beiden Achsen (16, 18) eingeschlossenen Winkels schneiden.

4. Vorrichtung nach Anspruch 3, **dadurch gekennzeichnet, daß** die Winkelstellung der Lagerhülse (40) und die Axialverstellung der darin gelagerten Welle jeweils durch einen Weggeber ermittelbar sind, und daß die Meßwerte einem Steuergerät (50) zuleitbar sind, das geeignet ist, in Abhängigkeit von diesen Meßwerten die Stellmotoren (M1, M2) derart zu steuern, daß sich bei nicht parallelen Achsen (16, 18) der Umlenkrollen (10, 12) die rechtwinkelig zu ihren Achsen verlaufenden Mittelebenen der beiden Umlenkrollen (10, 12) zumindest annähernd im Bereich der Winkelhalbierenden des von den beiden Achsen (16, 18) eingeschlossenen Winkels schneiden.

## Claims

1. An apparatus for setting the position of a band saw blade, comprising:
a) a first band wheel (10) adapted to rotate about a first axis (16) together with a shaft connected therewith;
b) an axially fixed and non-rotatable bearing bushing (40) in which the shaft is journalled to rotate about the first axis (16);
c) a second band wheel (12) being rotatable about a second axis (18), being journalled stationary on a saw base (30), and being connected to a drive (36, 38), the axes (16, 18) extending parallel to each other in a standard position;
d) a band saw blade (14) being guided over runner surfaces of the band wheels (10, 12);
e) means for tilting the first axis (16) relative to the second axis (18) within the plane defined by the axes (16, 18); and
f) means for displacing the first band wheel (10) along the first axis (16),
**characterized in that**
g) the bearing bushing (40) is adapted to be tilted about a third axis (42) by means of a first servo motor (M1), the third axis (42) extending under right angles to the plane defined by the axes (16, 18); and
h) that the shaft is adapted to be displaced within the bearing bushing (40) along the first axis (16) by means of a second servo motor (M2).

2. The apparatus of claim 1, **characterized in that** the setting movements of the two servo motors (M1, M2) are interrelated according to a predermined rule.

3. The apparatus of claim 2, **characterized in that** a setting increment of the second servo motor (M2) is related to a setting increment of the first servo motor (M1) such that when the axes (16, 18) of the band wheels (10, 12) are not parallel, the median planes of the band wheels (10, 12) extending under right angles to their axes intersect at least about in the area of the bisecting line of the angle enclosed by the axes (16, 18).

4. The apparatus of claim 3, **characterized in that** the angular position of the bearing bushing (40) and the axial displacement of the shaft journalled therein are adapted to be measured by means of a displacement sensor, and that the measured values are adapted to be fed to a control unit (50), the control unit being adapted to control the servo motors (M1, M2) depending on the measured values such that when the axes (16, 18) of the band wheels (10, 12) are not parallel, the median planes of the band wheels (10, 12) extending under right angles to their axes intersect at least about in the area of the bisecting line of the angle enclosed by the axes (16, 18).

## Revendications

1. Dispositif pour régler la position d'une lame de scie d'une scie à ruban, avec :
a) un premier galet de renvoi (10) qui est fixé de manière solidaire en rotation sur un arbre et peut tourner avec celui-ci autour d'un premier axe (16) ;
b) une douille palier (40) immobile axialement et fixe en rotation, dans laquelle l'arbre est monté rotatif autour du premier axe (16) ;
c) un deuxième galet de renvoi (12) qui est monté rotatif autour d'un deuxième axe (18) et fixe sur un châssis de scie (30), et qui est relié à un entraînement (36, 38), les axes (16, 18) s'étendant parallèlement l'un à l'autre dans une position de base ;
d) une lame de scie à ruban (14) guidée sur une surface de défilement des galets de renvoi (10, 12) ;
e) des moyens pour incliner le premier axe (16) par rapport au deuxième axe (18) dans le plan défini par les deux axes (16, 18) ; et avec
f) des moyens pour déplacer le premier galet de renvoi (10) le long du premier axe (16),
**caractérisé en ce que**
g) la douille d'appui (40) peut pivoter autour d'un troisième axe (42) au moyen d'un premier moteur de réglage (M1), axe qui s'étend perpendiculairement au plan défini par les axes (16, 18) ; et
h) **en ce que** l'arbre est mobile dans la douille d'appui (40) en direction du premier axe (16) au moyen d'un deuxième moteur de réglage (M2).

2. Dispositif selon la revendication 1, **caractérisé en ce que** les mouvements de réglage des deux moteurs de réglage (M1, M2) sont liés entre eux selon une loi donnée.

3. Dispositif selon la revendication 2, **caractérisé en ce qu'**à un incrément de réglage du premier moteur de réglage (M1) est associé un incrément de réglage du deuxième moteur de réglage (M2) de telle manière que, quand les axes (16, 18) des galets de renvoi (10, 12) ne sont pas parallèles, les plans médians des deux galets de renvoi (10, 12) s'étendant perpendiculairement à leurs axes se coupent au moins approximativement au niveau de la bissectrice de l'angle compris entre les deux axes (16, 18).

4. Dispositif selon la revendication 3, **caractérisé en ce que** la position angulaire de la douille palier (40) et le déplacement axial de l'arbre qu'elle soutient peuvent être déterminés par un capteur de déplacement, et **en ce que** les valeurs de mesure peuvent être envoyées à un appareil de commande (50), qui est apte à piloter les moteurs de réglage (M1, M2) en fonction de ces valeurs de mesure, de telle manière que, quand les axes (16, 18) des galets de renvoi (10, 12) ne sont pas parallèles, les plans médians des deux galets de renvoi (10, 12) s'étendant perpendiculairement à leurs axes se coupent au moins approximativement au niveau de la bissectrice de l'angle compris entre les deux axes (16, 18).
